Europäisches Patentamt

European Patent Office

Office européen des brevets

(11) Publication number: **0 260 949 B1**

# EUROPEAN PATENT SPECIFICATION

(45) Date of publication of patent specification: **03.06.92** (51) Int. Cl.5: **B29C 67/22**

(21) Application number: **87308194.7**

(22) Date of filing: **16.09.87**

(54) **Fluidized vacuum seal.**

(30) Priority: **19.09.86 US 909444**

(43) Date of publication of application:
**23.03.88 Bulletin 88/12**

(45) Publication of the grant of the patent:
**03.06.92 Bulletin 92/23**

(84) Designated Contracting States:
**AT BE CH DE ES FR GB GR IT LI NL SE**

(56) References cited:
EP-A- 0 028 441  FR-A- 2 169 522
FR-A- 2 546 259  GB-A- 844 594
GB-A- 879 271  US-A- 4 473 665

PATENT ABSTRACTS, vol. 9, no. 55
(M-362)[1778], 9th March 1985; & JP-A-59 190
835 (MITSUKUU KOGYO K.K.) 29-10-1984

(73) Proprietor: **THE DOW CHEMICAL COMPANY**
**2030 Dow Center Abbott Road P.O. Box 1967**
**Midland Michigan 48640-1967(US)**

(72) Inventor: **Korb, Jean G.**
**20 rue du Marais**
**F-67300 Schiltigheim(FR)**
Inventor: **Gondran, Gustave A.**
**10722 Briar Forest**
**Houston Texas 77042(US)**
Inventor: **Miller, Dwight J.**
**10638 Eddyburg Road**
**Newark Ohio 43055(US)**

(74) Representative: **Burford, Anthony Frederick et**
**al**
**W.H. Beck, Greener & Co. 7 Stone Buildings**
**Lincoln's Inn**
**London WC2A 3SZ(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a sealing mechanism for passing a continuously formed product from a zone of subatmospheric pressure to a zone of atmospheric pressure.

As is known, the formation of extruded foam bodies in the form of boards, planks, billets, etc., can be enhanced by the employment of a vacuum chamber wherein expansion of continuously extruded foamable material is accomplished under subatmospheric pressure. This, however, necessitates removal of the foamed extrudate from the vacuum chamber, and to do so without adversely affecting the reduced pressure controlled environment in such chamber has presented a difficult problem for solution.

One known solution to this problem involves the employment of an inclined barometric leg which permits continuous removal of the extrudate from a vacuum chamber at the top of the leg in either continuous or discrete lengths to the atmosphere without affecting the reduced pressure within the vacuum chamber. For further details of this technique, reference may be had to U.S. Patents 3,704,083 and 4,044,084.

Another solution to the extraction problem is set forth in U.S. Patent 4,487,731. This solution generally involves the continuous extrusion of foamable material into a reduced pressure chamber or zone, cutting the foamed extrudate to length in such reduced pressure chamber, transferring the cut length into a second contiguous chamber or zone which cyclically alternates between such reduced pressure and atmospheric pressure, such transfer being effected when the second chamber is at reduced pressure, and then discharging the cut length from the second chamber to the atmosphere when such second chamber is at atmospheric pressure. This extraction procedure requires a large number of vacuum cycles per hour in order to achieve a desired level of output.

U.S. Patent 4,486,369 provides for continuous extrusion of material, such as foam, into a controlled environment, such as a vacuum chamber or zone at reduced pressure, and cutting the extrudate to length within such vacuum chamber. The cut lengths are extracted from the vacuum chamber by inventorying a plurality of the cut lengths in an extraction chamber or zone then at reduced pressure, and thereafter discharging the inventory from the extraction chamber to the atmosphere without affecting the reduced pressure in the vacuum chamber. This extraction procedure decreases the number of required vacuum cycles due to the discharging at atmospheric pressure of a plurality of cut lengths or boards.

A major problem all solutions must overcome is the seal between the subatmospheric zone and the atmospheric zone.

While the inclined barometric leg solution does provide a seal for a continuously formed extruded foam body, this solution suffers from a lack of visual and proximity control of downstream equipment due to the physical separation of the extruder system from the downstream process equipment. The lack of visual and proximity control is due to the barometric tunnel. The water level in the barometric leg is also a function of the vacuum applied.

A need still exists for a sealing means for passing a continuously formed product from subatmospheric to atmospheric pressure that allows visual and proximity control of downstream equipment. A secondary need also exists for a sealing mechanism which allows a subatmospheric pressure water level to be independent of the subatmospheric pressure applied.

The present invention relates to a fluidized vacuum seal for passing a continuously formed product having two substantially parallel major faces and two minor faces from a zone of subatmospheric pressure to a zone of atmospheric pressure.

This fluidized vacuum seal has a lower continuous belt extending from the zone of subatmospheric pressure to the zone of atmospheric pressure able to seal a first major face of the continuously formed product, and an upper continuous belt extending in a like manner as the lower continuous belt and able to seal a second major face of the continuously formed product. There is also a means for adjusting the distance between the lower continuous belt and the upper continuous belt.

There is also a means for sealing the two minor faces of continuously formed product.

Also present is a liquid reservoir with the liquid open to the atmosphere and present in such an amount so as to completely cover both continuous belts and the minor faces sealing means on the atmospheric pressure side thereof.

The present invention also has a means for removing from the zone of subatmospheric pressure the liquid which leaks through the seal from the zone of subatmospheric pressure.

According to one aspect of the present invention, there is provided a fluidized vacuum seal for passing a continuously formed product having two substantially parallel major faces and two minor faces from a zone of subatmospheric pressure to a zone of atmospheric pressure comprising:

a) a lower continuous belt to seal a first major face of the continuously formed product;

2

EP 0 260 949 B1

b) an upper continuous belt to seal a second major face of the continuously formed product;

c) means for adjusting the distance between a) and b);

d) means for sealing the two minor faces of the continuously formed product;

e) a liquid reservoir with liquid open to atmospheric pressure and present in such amount so as to completely cover a), b) and d) on the atmospheric pressure side thereof; and

f) means for removing, from the zone of subatmospheric pressure, liquid leaking between a), b) and d) and the continuously formed product.

Surprisingly, one can pass continuously formed product from a zone of subatmospheric pressure to a zone of atmospheric pressure without cycling the zone of subatmospheric pressure from subatmospheric to atmospheric to allow for product discharge, or requiring a barometric leg, by allowing a controlled rate of liquid seepage through the sealing elements,

While the present invention will be useful for many continuously formed products, especially those having two substantially parallel major faces and two minor faces, preferably parallel, one major use will be in the production of continuously extruded thermoplastic foam bodies, such as foam board.

In one embodiment, the invention provides a process of forming a foamed board which comprises continuously extruding foamable thermoplastic resin onto a zone at subatmospheric pressure to form a continuous extruded thermoplastic foam board and removing said board from said zone, wherein the board is removed by passage through a fluidized vacuum seal of the invention.

The invention also provides an apparatus for forming a foamed board, said apparatus comprising a chamber, means for maintaining said chamber at subatmospheric pressure, means for extruding a foamable thermoplastic resin into said chamber to form a continuous extruded thermoplastic foam board, and a fluidized vacuum seal of the invention for removal of the board from said chamber.

In the Drawings

Figure 1 illustrates a side view of the continuous belts of the fluidized vacuum seal;

Figure 1A is a sectional view generally along the line 1A of Figure 1 and drawing the location of conveyors engaging wheels;

Figure 2 illustrates a front sectional view of the fluidized vacuum seal, including two embodiments for sealing the minor faces of the continuously formed product. The view is taken generally along line 2 in Figure 1;

Figure 2A is a sectional view of one embodiment for sealing the minor face taken generally along line 2A of Figure 2;

Figure 2B is a sectional view of a second embodiment for sealing the minor face taken generally along line 2B of Figure 2; and

Figure 3 illustrates a process employing the fluidized vacuum seal of the present invention.

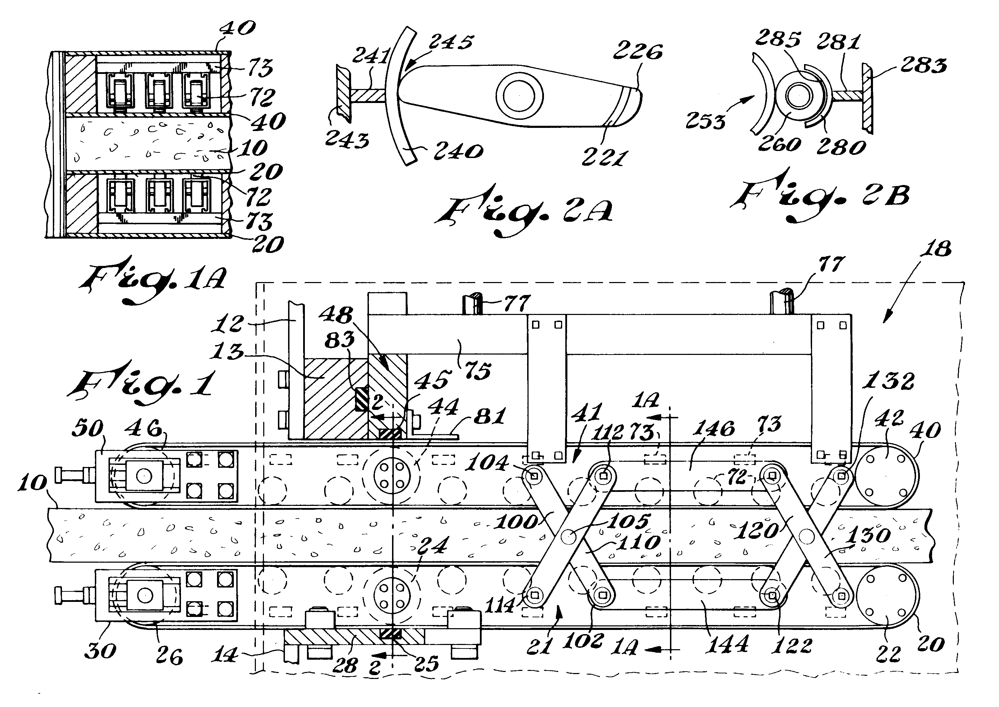

Referring to Figure 1, continuously formed product 10, moves from a zone of subatmospheric pressure, as partially defined by enclosure walls 12 and 14, to the liquid reservoir 18, with the liquid open to atmospheric pressure, and then to the atmosphere.

As can be seen by reference to Figure 1, a lower continuous belt 20 and an upper continuous belt 40 seal two substantially parallel major faces of a continuously formed product by extending the upper and lower surfaces of the continuous belts from the zone of subatmospheric pressure to the liquid reservoir.

The continuous belt material is any material that does not permit easy passage of the liquid, such as an open mesh structure. The material must also move and handle the continuously formed product in a manner that is noninjurious to the continuously formed product. One example of a useful material is rubberized cloth.

As is seen in Figure 1, the continuous belts are respectively supported by rollers 22, 24, 26, 42, 44, and 46. Preferably, one or more of the rollers, such as 22, 42 or 22 and 42, are driven so as to advance the continuously formed product from the subatmospheric zone into the fluid reservoir.

Rollers 24 and 44 are present at the interface of the subatmospheric/liquid reservoir (atmospheric) zones. Preferably, gasket material 25 and 45 is placed in flanges 28 and 48 and is in intimate contact with the continuous belts which are in intimate contact with rollers 24 and 44.

Rollers 22 and 42 or 26 and 46 may also have advantageously present a belt tensioning assembly 30 and 50.

Other wheels 72 are mounted on internal mounting bars 73 within the framework supporting the continuous belts to assure intimate contact of the continuous belts with the continuously formed product.

While either or both continuous belts may be slidably mounted so that the continuous belts will move normal to the two substantially parallel major faces of the continuously formed product to compensate for

3

vertical, i.e., thickness, changes, preferably the lower continuous belt is attached, to flange 28, while the upper continuous belt is positionally mounted to allow for thickness changes.

For example, as seen in Figure 1, the upper continuous belt is mounted to a frame 75 which has rods 77 attached to a means for adjusting a distance between the surfaces of the upper and lower continuous belts in intimate contact with continuously formed product. By properly positioning the rods in a manner normal to the surface of the upper continuous belt, the surfaces of the upper and lower continuous belts are placed in intimate contact with the continuously formed product to minimize liquid seepage and preferably to drive the continuously formed product into the liquid reservoir.

To also minimize liquid seepage, flange 48 is attached to the frame 75. Preferably, belt follower plate 81 is attached to flange 48 and additional gasket material 83 is present in enclosure wall attachment 13 and in intimate contact with flange 48.

Preferably, the upper and lower continuous belt frames 41 and 21 respectively are connected on one or both sides of the continuous belt frames by crossing members 100, 110 and 120, 130 with one end 102, 112, 122 and 132 of each crossing member slidable in slots 144 and 146, providing a scissors-like motion.

To elaborate further, crossing member 100 is pivoted at 104 to the upper continuous belt frame, while crossing member 110 is pivoted at 114 to the lower continuous belt frame and both crossing members are pivoted at 105, to each other, at the point of their crossing. Similarly, crossing members 120 an 130 are pivoted at their lower and upper ends respectively to the lower and upper continuous belt frame respectively and also are pivoted to each other. Slidable ends 102, 112, 122 and 132 of the crossing members are attached to slidable members, for example, wheels which are slidable in slots or tracks 144 and 146. The slidable ends are also attachable to other slidable members, for example, cylindrical bars, which extend completely through the continuous belt frames through openings 144 and 146 which also extend completely through the continuous belt frames.

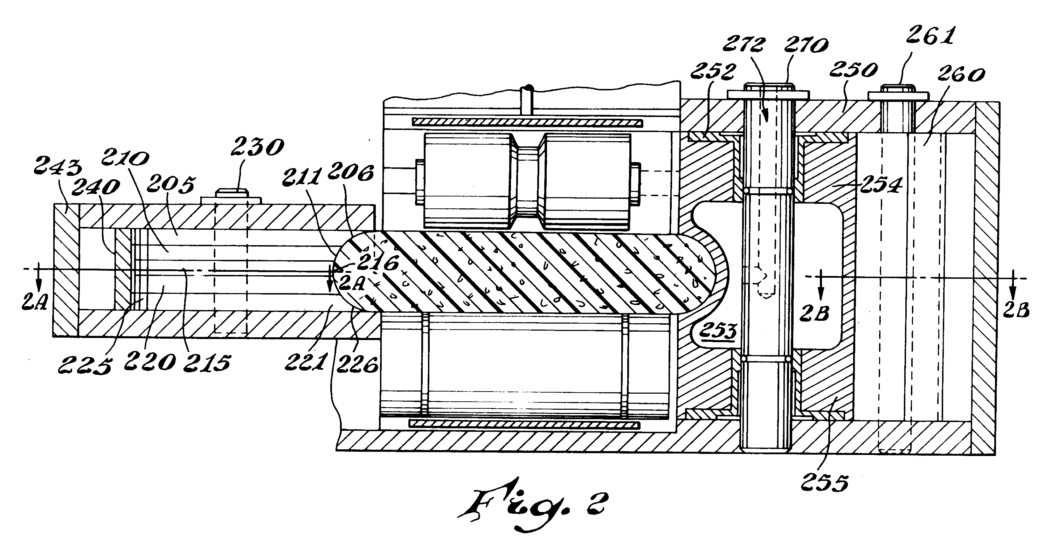

Two means for sealing the two minor faces of continuously formed product are illustrated sectionally in Figure 2.

In one embodiment, a housing holds cams 205, 210, 215, 220 and 225. As is shown, the cams have a common pivot point or axis 230 and the faces of each of the cams contacting the continuously formed product are shaped, for example, angled, so as to provide a minimum of open space for liquid seepage between the cams and the continuously formed product. This angling is shown at points 206, 211, 216, 221 and 226.

The exact number of cams is not critical, but the number, shape of the contacting faces and height of the cams when stacked should provide a minimum of open space for liquid seepage between the cams and continuously formed product.

Figure 2A illustrates a sectional view of the cams, looking down on a sectional view of cam 215 and including the edges of cams 220 and 225 that contact the continuously formed product. As is seen in Figure 2A, each cam can be described as essentially a rotatable bar with a varying width and partially rounded faces or contacting surfaces. The faces of the cams in contact with the continuously formed product are also angled to conform to the continuously formed product thus minimizing liquid seepage.

Also illustrated in Figure 2A is one embodiment of a means for minimizing liquid seepage between the cams and the housing. This illustrated embodiment is a partially circumferential member 240 attached at 241 to the housing wall 243 and covering the cams for the height of the stacked cams. This partially circumferential member has a tolerance of 0.003 inch to 0.005 inch (0.08-0.13 mm) at point 245 to minimize liquid seepage.

Referring again to Figure 2, a second embodiment for sealing the two minor faces of the continuously formed product is illustrated sectionally. Housing 250 holds two cylindrical members, one inflatable 252 and one solid 260.

The inflatable cylindrical member is able to be rotated about a central axis formed by the centerpoints of all circles that define the cylinder. While the inflatable cylindrical member may be completely inflatable, preferably only the section that contacts the continuously formed product is inflatable 253, while both ends 254 and 255 of the cylindrical member are of a solid material, such as, for example, solid rubber or steel.

Preferably, to inflate the inflatable section of the inflatable cylindrical member, a gas or liquid is passed through a channel 272 in the axis 270 to inflate, or deflate, the inflatable section 253 to adjust for horizontal or width changes in the continuously formed product.

The solid cylindrical member 260 rotates around a central axis 261 parallel to that of the inflatable cylindrical member. The material of the solid cylindrical member is, for example, solid rubber or steel.

An embodiment of a means for minimizing liquid seepage between the solid cylindrical member and the housing is illustrated in Figure 2B. The description of this means is the same as that described in Figure 2A with reference points 280, 281, 283 and 285 corresponding to 240, 241, 243 and 245, respectively.

The fluidized vacuum seal of the present invention passes the continuously formed product from a zone of subatmospheric pressure to a liquid reservoir open to the atmosphere.

Liquid seepage is minimized with this liquidized vacuum seal, but still occurs. Liquid is drawn into the zone of subatmospheric pressure and must be removed.

The means for removal of liquid from the zone of subatmospheric pressure is any means that will remove the liquid. Preferably, the means for removal of liquid is a pump.

More preferably, the means for removal of liquid from the zone of subatmospheric pressure includes a means for recirculating or returning the liquid to the liquid reservoir.

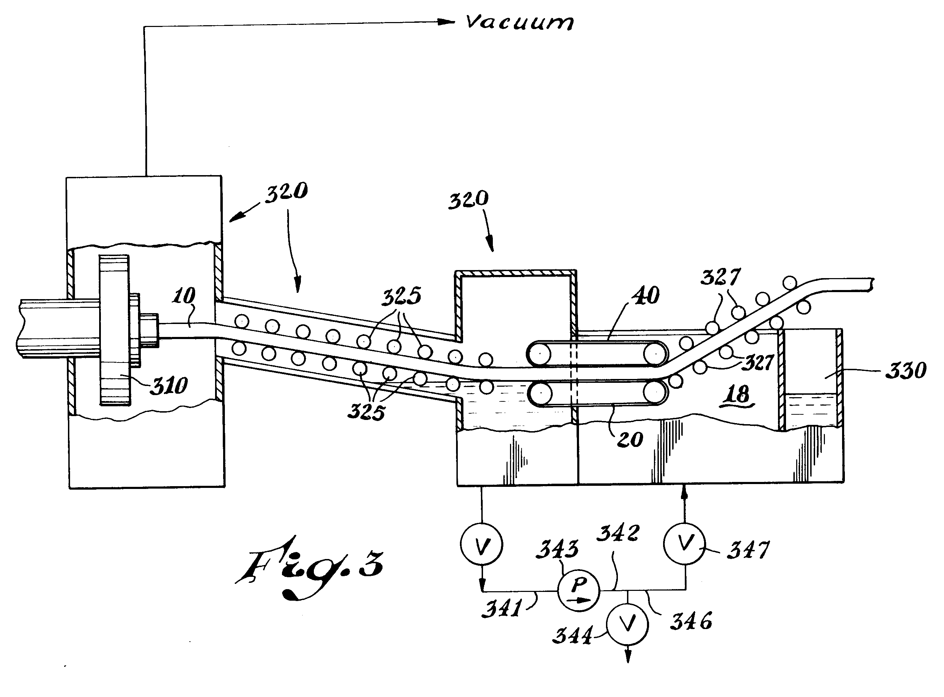

Figure 3 illustrates a process employing the fluidized vacuum seal of the present invention. Continuously formed product 10 exits an extruder 310 into the zone of subatmospheric pressure 320. Preferably, the extruder exit point is contained within the zone of subatmospheric pressure.

The continuously formed product moves through the zone of subatmospheric pressure, preferably supported by wheels or rollers 325, and is in intimate contact with the lower continuous belt 20 and the upper continuous belt 40 while moving through the liquidized vacuum seal from the zone of subatmospheric pressure to the liquid reservoir 18. The continuously formed product is then passed from the liquid reservoir to the atmosphere, preferably with the aid of wheels or rollers 327.

The liquid reservoir optionally has a liquid storage tank 330.

There is a means for removing the liquid from the zone of subatmospheric pressure which includes, for example, piping 341, valving means 342 and 344 and pumping means 343. Preferably, the means for removing the liquid includes a means for recirculating the liquid to the liquid reservoir 330, which includes, for example, more piping 346 and valving means 347.

In the following illustrative example, the continuously formed product is an extruded thermoplastic foam body.

Example

An extruded thermoplastic foamed body is made according to process of the present invention using the apparatus of the present invention.

A polystyrene with a weight average molecular weight of about 200,000 is fed to a $2\frac{1}{2}$ inch (6.4 cm) extruder at a rate of about 100 pounds per hour (45 kg/h) and melted.

Dichlorodifluoromethane at a rate of about 11.0 parts per hundred of polystyrene by weight is injected into the molten polystyrene and mixed.

This mixture is then passed through a slit extrusion die and then expanded and formed between substantially parallel plates in the first zone at subatmospheric pressure. The extrusion die pressure is from 500 to 800 psig (3.5 to 5.6 MPa, psig) and the foaming temperature is from 129 to 134°C. The expanded foam is then cooled with a water spray, passed through the fluidized vacuum seal into the water reservoir and removed from the water reservoir. The extruded foamed body had a thickness of about one inch (2.5 cm).

Table I illustrates further conditions and the results of three runs.

EP 0 260 949 B1

TABLE I
EFFECT OF VACUUM EXPOSURE

| Run Number | 1 | 2 | 3 |
|---|---|---|---|
| Vacuum psig | 8.2 | 11.0 | 12.7 |
| (KPa) | (56.5) | (76) | (87.5) |
| Line Speed ft/min | 15 | 15 | 15 |
| (m/min) | (4.6) | (4.6) | (4.6) |
| Cross-sectional Area in$^2$ | 7.9 | 7.6 | 5.6 |
| (cm$^2$) | (51) | (49) | (36) |
| Density lbs/ft$^3$ | 2.08 | 2.58 | 2.97 |
| (kg/m$^3$) | (3.33) | 4.13) | 4.76) |
| Cell Size (millimeters). | | | |
| V (vertical or thickness) | 1.12 | 1.16 | 1.30 |
| H (horizontal or width) | 1.16 | 1.08 | 1.12 |
| E (extrusion or longitudinal) | 1.62 | 1.54 | 1.54 |

**Claims**

1. A fluidized vacuum seal for passing a continuously formed product having two substantially parallel major faces and two minor faces from a zone of subatmospheric pressure to a zone of atmospheric pressure comprising:
   a) a lower continuous belt to seal a first major face of the continuously formed product;
   b) an upper continuous belt to seal a second major face of the continuously formed product;
   c) means for adjusting the distance between a) and b);
   d) means for sealing the two minor faces of the continuously formed product;
   e) a liquid reservoir with liquid open to atmospheric pressure and present in such amount so as to completely cover a), b) and d) on the atmospheric pressure side thereof; and
   f) means for removing, from the zone of subatmospheric pressure, liquid leaking between a), b) and d) and the continuously formed product.

2. A fluidized vacuum seal as claimed in Claim 1 further comprising g) means for recirculating the liquid removed in f) to the liquid reservoir of e).

3. A fluidized vacuum seal as claimed in Claim 1 or 2, wherein the means for sealing the two minor faces comprise:
   a) an inflatable cylindrical member rotatable about its axis to seal a minor face of the continuously formed product;
   b) a solid cylindrical member parallel to a), rotatable about its axis, and in intimate cointact with the inflatable cylindrical member;
   c) a housing for the inflatable cylindrical member and the solid cylindrical member; and
   d) means for minimizing liquid seepage between the solid cylindrical member and the housing.

4. A fluidized vacuum seal as claimed in Claim 3, wherein the means for minimizing liquid seepage between the solid cylindrical member and the housing is a partially cylindrical member coaxial with the solid cylindrical member and attached to the housing.

5. A fluidized vacuum seal as claimed in Claim 1 or 2, wherein the means for sealing the two minor faces comprise:
   a) at least two concentric cams having end faces for sealing a minor face of the continuously formed product;

6

b) a housing for the concentric cams; and

c) means for minimizing liquid seepage between the concentric cams and a housing.

6. A fluidized vacuum seal as claimed in Claim 5, wherein the means for minimizing liquid seepage between the concentric cams and the housing is a partially cylindrical member coaxial with the concentric cams and attached to the housing.

7. A process of forming a foamed board which comprises continuously extruding foamable thermoplastic resin onto a zone at subatmospheric pressure to form a continuous extruded thermoplastic foam board and removing said board from said zone, wherein the board is removed by passage through a fluidized vacuum seal as defined in any one of the preceding claims.

8. An apparatus for forming a foamed board, said apparatus comprising a chamber, means for maintaining said chamber at subatmospheric pressure, means for extruding a foamable thermoplastic resin into said chamber to form a continuous extruded thermoplastic foam board, and a fluidized vacuum seal as defined in Claim 1 for removal of the board from said chamber.

**Revendications**

1. Joint pour vide par entrainement de liquide pour faire passer un produit, formé en continu et présentant deux grandes faces sensiblement parallèles et deux petites faces , d'une zone à pression inférieure à la pression atmosphérique à une zone à pression atmosphérique, comportant:

a) un tapis inférieur continu pour assurer l'étanchéité d'une première grande face du produit formé en continu;

b) un tapis supérieur continu pour assurer l'étanchéité d'une seconde grande face du produit formé en continu;

c) des moyens pour ajuster la distance entre a) et b);

d) des moyens pour assurer l'étanchéité des deux petites faces du produit formé en continu;

e) un réservoir de liquide contenant du liquide à la pression atmosphérique, en quantité suffisante pour couvrir complétement a), b) et d) sur leur côté soumis à la pression atmosphérique et

f) des moyens pour extraire, hors de la zone à pression inférieure à la pression atmosphérique, le liquide qui fuit entre a) b) et d) et le produit formé en continu.

2. Joint pour vide par entrainement de liquide comme revendiqué dans la revendication 1, comportant en outre

g) des moyens pour recycler dans le réservoir de liquide de e) le liquide extrait dans f).

3. Joint pour vide par entrainement de liquide comme revendiqué dans la revendication 1 ou 2, dans lequel les moyens prévus pour assurer l'étanchéité des deux petites faces comportant :

a) un élément cylindrique gonflable pouvant tourner autour de son axe pour assurer l'étanchéité d'une petite face du produit formé en continu;

b) un élément cylindrique plein parallèle à a), pouvant tourner autour de son axe, et en contact intime avec l'élément cylindrique gonflable;

c) une enceinte pour l'élément cylindrique gonflable et l'élément cylindrique plein; et

(d) des moyens pour réduire au minimum l'entrainement du liquide entre l'élément cylindrique plein et l'enceinte.

4. Joint pour vide par entrainement de liquide comme revendiqué dans la revendication 3, dans lequel les moyens prévus pour réduire au minimum l'entrainement du liquide entre l'élément cylindrique plein et l'enceinte sont constitués par un élément partiellement cylindrique, coaxial à l'élément cylindrique plein et fixé à l'enceinte.

5. Joint pour vide par entrainement de liquide comme revendiqué dans la revendication 1 ou 2, dans lequel les moyens prévus pour assurer l'étanchéité des deux petites faces comportent:

a) au moins deux cames concentriques présentant les faces d'extrémité prévues pour assurer l'étanchéité d'une petite face du produit formé en continu;

b) une enceinte pour les cames concentriques; et

c) des moyens pour réduire au minimum l'entrainement du liquide entre les cames concentriques et l'enceinte.

6. Joint pour vide par entrainement de liquide comme revendiqué dans la revendication 5, dans lequel les moyens prévus pour réduire au minimum l'entrainement du liquide entre les cames concentriques et l'enceinte sont constitués par un élément partiellement cylindrique coaxial avec les camps concentriques et fixé à l'enceinte.

7. Procédé de formage d'un panneau de produit moussant consistant à extruder en continu, dans une zone à pression inférieure à la pression atmosphèrique, une résine thermoplastique pouvant mousser pour former un panneau de produit thermoplastique moussant extrudé en continu et à extraire ledit panneau hors de ladite zone, procédé dans lequel on extrait le panneau en passant par un joint pour vide par entrainement du liquide tel que défini dans l'une quelconque des revendications précédentes.

8. Appareil pour former un panneau de produit moussant, ledit appareil comportant une chambre, des moyens pour maintenir ladite chambre à une pression inférieure à la pression atmosphérique, des moyens pour extruder, dans ladite chambre, une résine thermoplastique pouvant mousser pour former un panneau thermoplastique de produit moussant extrudé en continu, et un joint pour vide par entrainement de liquide tel que défini dans la revendication 1 pour extraire le panneau hors de ladite chambre.

**Patentansprüche**

1. Dichtung für Unterdruck für die Beförderung eines kontinuierlich hergestellten Produktes mit zwei im wesentlichen parallelen größeren und zwei kleineren Flächen aus einer Zone mit subatmosphärischem Druck in eine Zone mit atmosphärischem Druck, welche umfaßt

    a) ein unteres kontinuierliches Förderband, das die erste der größeren Flächen des kontinuierlich hergestellten Produktes abdichtet;

    b) ein oberes kontinuierliches Förderband, das die zweite der größeren Flächen des kontinuierlich hergestellten Produktes abdichtet;

    c) eine Vorrichtung, die den Abstand zwischen a) und b) hält;

    d) eine Vorrichtung, die die beiden kleineren Flächen des kontinuierlich hergestellten Produktes abdichtet;

    e) einen Flüssigkeitsvorratsbehälter mit Flüssigkeit, die unter Atmosphärendruck steht und in einer Menge vorhanden ist, die ausreicht, um a), b) und d) auf der Atmosphärendruck-Seite vollständig zu bedecken; und

    f) eine Vorrichtung für die Entfernung von Flüssigkeit aus der Zone mit subatmosphärischem Druck, die zwischen a), b) und d) und dem kontinuierlich hergestellten Produkt dorthin gelangt.

2. Dichtung für Unterdruck nach Anspruch 1 weiterhin umfassend

    g) eine Vorrichtung zur Rückführung der nach f) entfernten Flüssigkeit in den Flüssigkeitsvorratsbehälter von e).

3. Dichtung für Unterdruck nach den Ansprüchen 1 oder 2, worin die Vorrichtungen für die Abdichtung der beiden kleineren Flächen umfassen :

    a) ein aufblasbares zylindrisches Teil, das sich um seine Achse drehen kann und dabei eine der kleineren Flächen des kontinuierlich hergestellten Produktes abdichtet;

    b) ein parallel zu a) angeordnetes festes zylindrisches Teil, das sich um seine Achse drehen kann und in engem Kontakt mit dem aufblasbaren Teil steht;

    c) ein Gehäuse für das aufblasbare zylindrische und das feste zylindrische Teil; und

    d) eine Vorrichtung zur Verminderung des Durchsickerns von Flüssigkeit zwischen dem festen zylindrischen Teil und dem Gehäuse.

4. Dichtung für Unterdruck nach Anspruch 3, wobei die Vorrichtung für die Verminderung des Durchsickerns von Flüssigkeit zwischen dem festen zylindrischen Teil und dem Gehäuse ein teilweise zylindrisches Teil ist, das koaxial mit dem festen zylindrischen Teil und an dem Gehäuse angebracht ist.

5. Dichtung für Unterdruck nach den Ansprüchen 1 oder 2, wobei die Vorrichtungen für die Abdichtung der beiden kleineren Flächen umfassen :

a) mindestens zwei konzentrische Teile ("cams") mit Endflächen zur Abdichtung einer kleineren Fläche des kontinuierlich hergestellten Produktes;

b) ein Gehäuse für diese konzentrischen Teile; und

c) Vorrichtungen für die Verminderung des Durchsickerns von Flüssigkeit zwischen den konzentrischen Teilen und dem Gehäuse.

6. Dichtung für Unterdruck nach Anspruch 5, wobei die Vorrichtung zur Verminderung des Durchsickerns von Flüssigkeit zwischen den konzentrischen Teilen und dem Gehäuse ein teilweise zylindrisches Teil ist, das koaxial mit den konzentrischen Teilen und an dem Gehäuse befestigt ist.

7. Verfahren zur Herstellung eines Schaumkörpers, welches umfaßt das kontinuierliche Extrudieren eines thermoplastischen, schäumbaren Harzes in eine Zone mit subatmosphärischem Druck, wodurch ein endloser Formkörper entsteht, und die Entfernung des Formkörpers aus dieser Zone, wobei der Schaumkörper durch eine Dichtung für Unterdruck geführt wird, wie sie in einem der vorhergehenden Ansprüche definiert ist.

8. Vorrichtung zur Herstellung eines Schaumkörpers, welche umfaßt eine Kammer, eine Vorrichtung zur Aufrechterhaltung von subatmosphärischem Druck in dieser Kammer, eine Vorrichtung zum Extrudieren von schäumbarem, thermoplastischem Harz in diese Kammer, wodurch ein endloser extrudierter thermoplastischer Formkörper entsteht, und eine Dichtung für Unterdruck, wie sie in Anspruch 1 definiert ist, zur Entfernung des Schaumkörpers aus dieser Kammer.

EP 0 260 949 B1

Fig. 2B

Fig. 2A

Fig. 1A

Fig. 1

10

Fig. 2

Fig. 3